# EUROPEAN PATENT SPECIFICATION

(11) **EP 2 687 396 B1**
(45) Date of publication and mention of the grant of the patent: **20.07.2022**
(21) Application number: 12760930.3
(22) Date of filing: 12.03.2012
(51) Int. Cl.: B60L 7/22, B60L 15/20, H02P 3/18, B60L 7/00, B60L 7/02, B60L 7/06, B60L 7/10, B60L 7/12, B60L 7/04, B60L 7/14, B60L 7/16, H02P 3/12, H02P 3/22, H02P 3/14

(54) **MOTOR DRIVING DEVICE**
MOTORANSTEUERUNGSVORRICHTUNG
DISPOSITIF DE COMMANDE DE MOTEUR

(30) Priority: 18.03.2011 JP 2011060068
(43) Date of publication of application: 22.01.2014
(73) Proprietor: NTN Corporation, Osaka-shi, Osaka 550-0003 (JP)
(72) Inventor: OKADA, Koichi, Iwata-shi Shizuoka 438-0037 (JP)
(74) Representative: Hirsch & Associés
(86) International application number: PCT/JP2012/056277
(87) International publication number: WO 2012/128102

(56) References cited:
- EP-A1- 0 742 637
- DE-A1-102006 047 692
- JP-A- 2003 024 686
- JP-A- 2003 164 002
- JP-A- 2003 164 002
- JP-A- 2004 216 997
- JP-A- 2004 216 997
- JP-A- 2004 278 315
- JP-A- 2006 258 289
- JP-A- 2009 055 781
- JP-A- 2010 187 820
- JP-A- 2010 207 053
- JP-A- 2010 207 053
- US-A- 5 557 181
- US-A1- 2010 315 025

## Description

### BACKGROUND OF THE INVENTION

### (Field of the Invention)

The present invention relates to a motor drive device that may control the driving of a battery-powered motor, such as a traction motor to drive an electric vehicle or a motor to drive an industrial machine.

### (Description of Related Art)

A battery-powered motor such as a motor to drive an electric vehicle may be stopped by a regenerative braking operation, thus recovering its kinetic energy. The Patent Document 1 listed below discloses a system to maintain a constant regenerative braking torque in an electric vehicle that includes a permanent magnet motor as a drive source. The system can include a variable resistor that dissipates the power generated by the permanent magnet motor during a regenerative braking operation and can also include a resistance adjuster that adjusts the resistance of the variable resistor in such a way to match the regenerative braking torque with the required regenerative braking torque.

[Patent Document 1] JP Laid-open Patent Publication No. H05-161208

### SUMMARY OF THE INVENTION

Once a battery is fully charged, a regenerative braking operation with a motor may no longer be possible, thus necessitating the use of mechanical brake(s) to perform a braking operation. Hence, the concern remains for possible large heat that may be generated by the use of such mechanical brake(s) to brake an electric vehicle when driving down a long slope. This may necessitate the installment of larger brake unit(s).

The Patent Document 1 listed above suggests the provision of a resistor that can dissipate the power generated by a motor in order to maintain a constant regenerative braking torque. The inventor realized that the provision of such a resistor may provide may also perform a braking operation with a motor. More specifically, instead of recovering the power generated by the motor and storing it in a battery, it may be possible to let the resistor dissipate the power generated by the motor, thus in effect performing a braking operation with a motor. Yet, given the large amount of heat that may be dissipated by a resistor and the need to provide a way to remove the large heat from the resistor, a resistor or resistors of significant size may be necessary to produce a sufficient braking torque, thus making this an impractical way to perform a braking operation with a motor.

An object of the present invention is to provide a motor drive device that enables performing a braking operation with a motor even when a battery is fully charged, allows for the provision of smaller mechanical brake(s) or even the omission of mechanical brake(s), and does not require the installment of a larger resistor and/or larger heat removal structure to dissipate generated power. The general aspects of the present invention will now be described using the reference signs in the figures showing embodiments of the present invention.

The present invention may provide a motor drive device 20 which includes a circuit 31 (e.g., an inverter) with a connection configuration that is switchable among: (a) a drive operative connection configuration that allows a motor unit 6 to be driven with power supplied from a battery unit 19; (b) a regenerative braking connection configuration that allows power generated by the motor unit 6 during a regenerative braking operation to be used to charge the battery unit 19; and (c) a short-circuit connection configuration that causes motor coils of the motor unit 6 to short-circuit to create a braking force. The motor drive device 20 also includes a short-circuit current controller 26 configured to control a short-circuit current that flows when the connection configuration of the circuit is (c) the short-circuit connection configuration. The motor drive device 20 also includes a regenerative braking and short-circuit braking switching controller 25 configured to perform control that causes the connection configuration of the circuit 31 to be switched from (b) the regenerative braking connection configuration to (c) the short-circuit connection configuration, or vise versa.

In the aforementioned configuration, the regenerative braking and short-circuit braking switching controller 25 may cause the connection configuration of the circuit 31 to be switched to (c) the short-circuit connection configuration that causes motor coils of the motor unit 6 to short-circuit to create a braking force in the motor unit 6. Short-circuiting the motor coils of the motor unit 6 would create a significant braking force. However, merely short-circuiting the motor coils may result in the generation of excessively large braking torque, thus leading to abrupt braking of a vehicle. In order to address this, the short-circuit current controller 26 may control a short-circuit current that flows when the connection configuration of the circuit 31 is (c) the short-circuit connection configuration, in such a way to cause only a required torque to be generated in the motor unit 6, thus creating a desired braking torque without leading to abrupt braking of a vehicle. The regenerative braking and short-circuit braking switching controller 25 may cause the connection configuration of the circuit 31 to be switched back to (b) the regenerative braking connection configuration, to allow for performing a standard regenerating braking operation.

The provision of such a regenerative braking and short-circuit braking switching controller 25 enables switching of the connection configuration of the circuit 31 from (b) the regenerative braking connection configuration to (c) the short-circuit connection configuration, or vise versa, and the provision of such a short-circuit current controller 26 enables controlling a short-circuit braking operation. In this way, a braking operation can be performed with a motor unit 6 even when a battery unit is fully charged. Thus, in many situations, a braking force created in a motor unit 6 can be used to brake an electric vehicle or any machine equipped with a motor or motor unit. This also allows for advantageously limiting the use of mechanical brake(s) 9 to auxiliary purposes, such as a final touch to ensure the stopping of a vehicle during a braking operation or an assist for a braking operation with a motor unit 6. This in turn allows for the provision of smaller mechanical brake(s) or even the omission of mechanical brake(s). When applied to an electric vehicle, switching to a short-circuit braking operation with a motor unit 6 may be carried out, if a battery unit is fully charged, to brake the electric vehicle when driving down a long slope. This can minimize the braking load on mechanical brake(s) 9, thus reducing or preventing the heat that may be generated and/or the wear that may be caused by friction braking with the mechanical brake(s) 9. A short-circuit braking operation may heat the motor unit 6 through dissipation of generated power. Nevertheless, it usually takes a considerable time for the motor unit 6 to overheat, thus making a short-circuit braking operation a practical choice.

In the present invention, the regenerative braking and short-circuit braking switching controller 25 may be configured to cause the connection configuration of the circuit 31 to be switched to (c) the short-circuit connection configuration, if a fully charged state of the battery unit 19 is detected with a charging level detector 27 which is configured to detect whether a charging level of the battery unit 19 is equal to or greater than a predefined charging level, where a charging level equal to or greater than the predefined charging level corresponds to a fully charged state of the battery unit 19. A battery unit 19 may often be fully charged, where a regenerative braking operation may no longer be possible. In the aforementioned configuration, however, the connection configuration of the circuit 31 may be switched to (c) the short-circuit connection configuration, in response to detection of a fully charged state of the battery unit 19, thus allowing for performing a braking operation with the motor unit 6 through the formation of short-circuit(s). Switching to (c) the short-circuit connection configuration may be automatic, thus preventing the sudden occurrence of inadequate braking force due to a fully charged battery unit.

In the present invention, the motor unit 6 may include a synchronous motor and the circuit 31 with a switchable connection configuration may be an inverter. A synchronous motor such as an interior magnet synchronous motor is quite often used in electric vehicles. Such a synchronous motor may be driven with an AC power that may be converted by an inverter 31 from a DC power supplied from a battery unit 19. An inverter 31 may include a combination of a plurality of switching devices 31a, 31b and freewheeling diodes 31d each connected in parallel with the corresponding one of the switching devices 31a, 31b. The switching devices 31a, 31b may be opened or closed to form various combinations of open states and closed states that implement the aforementioned circuit with a switchable connection configuration. The configuration where the aforementioned circuit with a switchable connection configuration is an inverter 31 can eliminate the need to provide a customized circuit that serves as the aforementioned circuit with a switchable connection configuration.

The short-circuit current controller 26 may be configured to control a short-circuit current through pulse width modulation drive. Pulse width modulation drive enables performing, with a simplified circuit configuration, a precise short-circuit current control.

In a configuration where the short-circuit current controller 26 is configured to control a short-circuit current through pulse width modulation drive, the short-circuit current controller 26 may be configured to utilize vector control that uses a torque current and a field current to control the short-circuit current through pulse width modulation drive. Vector control that uses a torque current and a field current enables performing a precise short-circuit current control, thus causing accurate short-circuit braking to achieve a desired braking operation.

In the present invention, a resistor braking circuit 101 may further be provided which includes a power resistor 102 and a switch 103, 104 that may be connected in series with the power resistor. The resistor braking circuit 101 may be disposed external to the motor unit 6. The power resistor 102 may be operable to dissipate power generated by the motor unit 6 to create a braking force in the motor unit. The regenerative braking and short-circuit braking switching controller 25 may be operable to control the circuit 31 with a swtichable connection configuration as well as the switch 103, 104 to provide (d) a resistor braking configuration that allows a current generated by the motor unit 6 to flow into the resistor braking circuit 101. The regenerative braking and short-circuit braking switching controller 25 may be configured to cause switching among (b) the regenerative braking connection configuration, (c) the short-circuit connection configuration and (d) the resistor braking configuration, or switching among (b) the regenerative braking connection configuration, (c) the short-circuit connection configuration, (d) the resistor braking configuration and (c+d) a combination of the short-circuit connection configuration and the resistor braking configuration.

A short-circuit braking operation may heat the motor unit 6 through dissipation of generated power and may result in an elevated temperature of the motor unit, where the short-circuit braking operation may no longer be effective. In the aforementioned configuration, however, the power resistor 102 may be arranged external to the motor unit 6. Thus, even when a regenerative braking operation is not available due to a fully charged battery unit and a short-circuit braking operation is not effective as well, a braking operation with the motor unit 6 can still be performed by utilizing (i) the combination of short-circuit braking and additional braking that uses the aforementioned power resistor 102 or (ii) only the braking that uses the aforementioned power resistor 102. The braking that uses the power resistor 102 may be enabled or disabled as necessary through the switch 103, 104. The power resistor 102 can be used as an assist for a short-circuit braking operation. Thus, the heat that may be dissipated by the power resistor 102 in the aforementioned configuration can be -- in contrast to a configuration where there is no short-circuit braking option and the braking that uses the power resistor 102 is the only choice available to perform a braking operation with the motor unit 6 when a regenerative braking operation is no longer possible -- relatively small. This allows for the provision of a simpler heat removal structure and can also eliminate the need to increase the size of the motor drive device to install the power resistor 102.

In a configuration where the power resistor 102 is provided, the regenerative braking and short-circuit braking switching controller 25 may be configured to, if a fully charged state of the battery unit 19 is detected with a charging level detector 27 which is configured to detect whether a charging level of the battery unit 19 is equal to or greater than a predefined charging level, where a charging level equal to or greater than the predefined charging level corresponds to a fully charged state of the battery unit 19, cause the connection configuration of the circuit 31 to be switched to one of (c) the short-circuit connection configuration and (d) the resistor braking configuration, or to one of (c) the short-circuit connection configuration, (d) the resistor braking configuration and (c+d) the combination of the short-circuit connection configuration and the resistor braking configuration, depending on which one of temperature zones that a temperature of the motor unit belongs to, with the temperature of the motor unit being sensed by a motor temperature sensor 106 configured to sense a temperature of the motor unit. In the aforementioned configuration, the charging level detector 27 that may be configured to sense a charging level of the battery unit 19 is provided. The motor temperature sensor 106 is provided as well. Depending on the detection and/or sensing results, the regenerative braking, the short-circuit braking, and/or the resistor braking may be selected to perform an appropriate braking operation that does not cause an excessive braking load on the motor unit 6 and etc.

A motor drive device according to the present invention may be associated with a motor unit 6 having the aforementioned configuration(s), wherein the motor unit 6 may include a traction motor to drive an electric vehicle. In the field of electric vehicles, there may be a strong demand for a lighter weight vehicle to increase the maximum travel range. Hence, a battery unit 19 used to achieve this may often have a correspondingly smaller capacity. Such a battery unit 19 may quickly reach a fully charged state, where a regenerative braking operation may no longer be possible.

Note that a smaller mechanical brake 9 has a lighter weight. Thus, in the aforementioned configuration, the present invention can be more effective because it allows for the provision of such smaller mechanical brake(s) by enabling the switching from a regenerative braking operation to a short-circuit braking operation, or vise versa. In particular, the present invention can be more effective because it allows for the provision of smaller mechanical brake(s) 9 by minimizing the work which the mechanical brake(s) may have to perform to brake an electric vehicle when driving down a long slope with a fully charged battery where regenerative braking is not available.

The present invention may provide an electric vehicle which comprises a motor drive device 20 having the aforementioned configurations. Thus, an electric vehicle according to the present invention is advantageous because it comprises a motor drive device 20 according to the present invention, thus enabling performing a braking operation with a motor unit even when a battery unit 19 is fully charged, allowing for the provision of smaller mechanical brake(s) 9 or even the omission of mechanical brake(s) 9, and not requiring the installment of a larger resistor and/or larger heat removal structure to perform dissipation of generated power.

An electric vehicle according to the present invention may further include a motor unit 6, a wheel bearing unit 4, and a reducer unit 7, wherein the motor unit 6, together with the wheel bearing unit 4 and the reducer unit 7, may form an in-wheel motor system 8 that is partly or entirely disposed within a wheel, with the in-wheel motor system 8 including the motor unit 6, the wheel bearing unit 4 and the reducer unit 7. The reducer unit 7 may comprise a cycloidal reducer. In a configuration where an electric vehicle includes in-wheel motor system(s) 8, each wheel of the electric vehicle may be equipped with a motor unit 6 that operates independently of other motor unit(s) 6. This allows for splitting among the respective motor units 6 the total energy required (or the braking load) to perform the aforementioned short-circuit braking operation. A cycloidal reducer has a significant reduction ratio. Thus, in a configuration where a reducer unit comprises a cycloidal reducer, an electric vehicle can be braked more effectively by the short-circuit braking operation with the motor unit(s) 6.

The present invention encompasses any combination of features defined by the claims, the specification and/or the drawings being used to interpret the claims. In particular, the present invention encompasses any combination of features defined by the dependent claims.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, as defined by the appended claims. In the accompanying drawings, like reference numerals are used to denote like parts throughout the several views, and:
Fig. 1 is a block diagram of a schematic configuration of an electric vehicle, as viewed from top, which includes a motor drive device according to the first embodiment of the present invention;
Fig. 2 is a block diagram of a schematic configuration of an inverter unit for the electric vehicle;
Fig. 3 is a block diagram showing the block diagram of Fig. 2 in more detail, by illustrating the electrical circuitry that may be present in an inverter;
Fig. 4A includes a circuit diagram of an inverter that may be present in an inverter unit for the electric vehicle;
Fig. 4B shows a waveform of a signal that may be observed in the circuitry of Fig. 4A;
Fig. 5 shows an explanatory diagram of a short-circuit connection configuration of an inverter for the inverter unit;
Fig. 6 is a block diagram of a general drive controller for the inverter unit, which may perform vector control;
Fig. 7 is a block diagram of a schematic configuration of a motor drive device according to the second embodiment of the present invention;
Fig. 8 is a longitudinal cross sectional view of an example of an in-wheel motor system for an electric vehicle, wherein the electric vehicle includes a motor drive system according to the present invention;
Fig. 9 is a cross sectional view of Fig. 8 taken along the line IX-IX;
Fig. 10 is a cross sectional view of Fig. 8 taken along the line X-X;
Fig. 11 is a fragmentary enlarged cross sectional view of Fig. 10;
Fig. 12 is a block diagram of a schematic configuration of a motor drive device according to the third embodiment of the present invention; and
Fig. 13 shows an explanatory diagram of a short-circuit connection configuration that may be available in the motor drive device.

### DESCRIPTION OF THE EMBODIMENTS

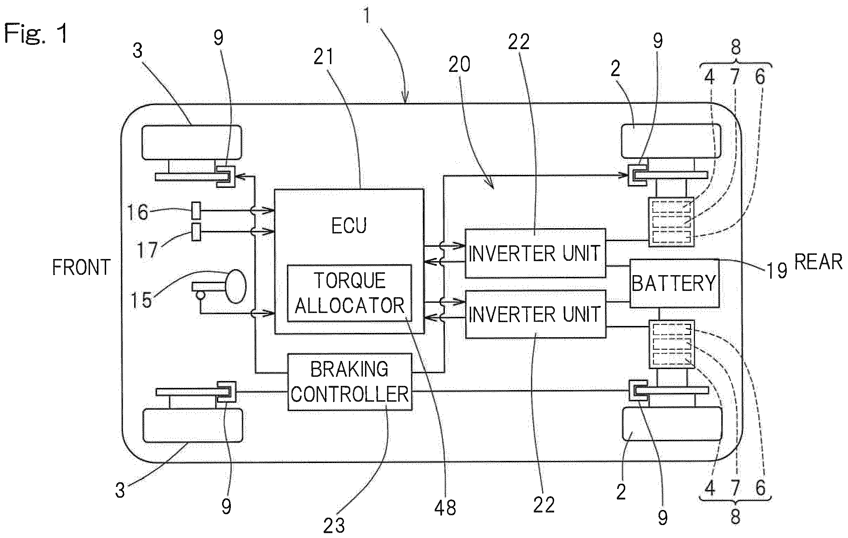

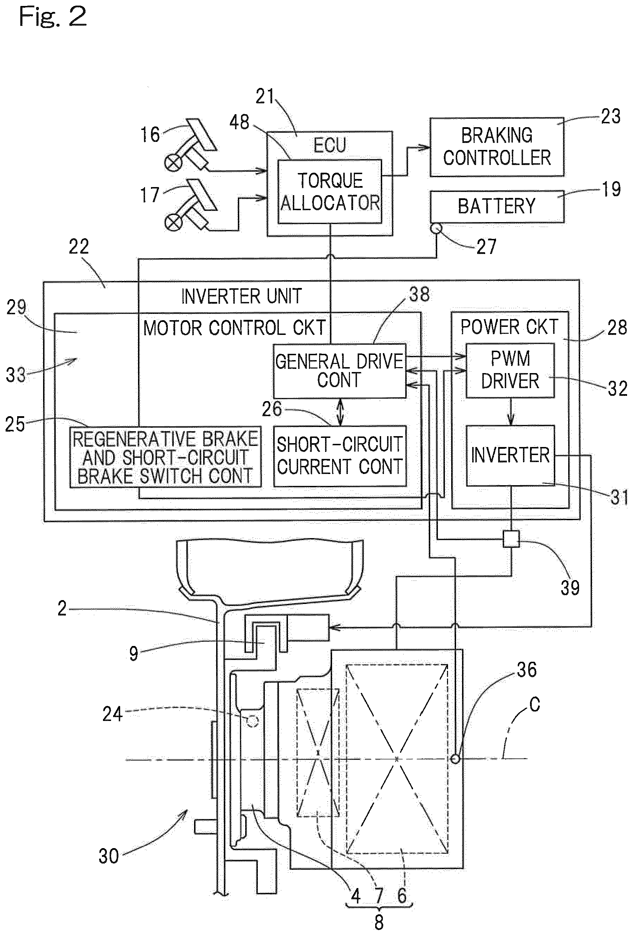

The first embodiment of the present invention will now be described in connection with Fig. 1 to Fig. 6. Fig. 1 shows a top view of a schematic configuration of an electric vehicle which includes a motor drive device according to the first embodiment of the present invention. The illustrated electric vehicle is a four-wheel vehicle that includes a vehicle body 1 with left and right rear wheels 2 and left and right front wheels 3, with the rear wheels being drive wheels and the front wheels being driven wheels. The front wheels 3 serve as steered wheels. The left and right drive wheels 2, 2 are driven by respective independent traction motor units 6. Rotation of a motor unit 6 is transmitted via a reducer unit 7 and a wheel bearing unit 4 to a wheel 2. The motor unit 6, the reducer unit 7 and the wheel bearing unit 4 are integrally assembled with each other to form an in-wheel motor system 8. The in-wheel motor system 8 as shown in Fig. 2 is partly or entirely disposed within the drive wheel 2, thus positioning the motor unit 6 in proximity to the wheel 2. In the embodiment under discussion, a drive wheel 2 extends along an axis C of the drive wheel 2, so as to overlap with the entirety of the wheel bearing unit 4, the entirety of the reducer unit 7 and part of the motor unit 6. In a variant, a drive wheel 2 may extend along an axis C of the drive wheel 2, so as to overlap with the entirety of the in-wheel motor system 8. The wheels 2, 3 are equipped with respective electrically driven mechanical brakes 9. The term "mechanical" is used in this context to denote that a mechanical brake or mechanical braking operation is different from a regenerative brake or regenerative braking operation. Note that a "mechanical brake" encompasses a hydraulic brake.

A control system will be briefly discussed. The illustrated vehicle body 1 is equipped with an ECU 21 which is a primary electronic control unit configured to perform general, integerated control of the vehicle, inverter unit(s) 22 (in the illustrated embodiment, two inverter units 22) configured to perform control of the respective traction motor units 6 according to commands from the ECU 21, and a braking controller unit 23. Such an ECU 21 and inverter unit(s) 22 may form a motor drive system 20. The ECU 21 may include a computer, programs that may be executed by the computer, and various electronic circuits. A common computer or electrical circuitries on a common substrate may form light current systems for the ECU 21 and the inverter unit(s) 22.

The ECU 21 may include a torque allocator 48 that is configured to generate an accelerating/decelerating command in the form of a torque command value, which will influence the traction motor units 6, 6 of the left and right wheels, based on a signal indicating accelerator position produced from an accelerator manipulation unit 16, a decelerating signal produced from a brake manipulation unit 17, and a cornering signal produced from a steering unit 15, and to send the accelerating/decelerating command to the inverter unit(s) 22. The torque allocator 48 may be configured to, in response to a decelerating signal produced from the brake manipulation unit 17, generate a braking torque command allocated to regenerative braking of the motor unit 6 and a braking torque command allocated to the operation of the mechanical brakes. Such a braking torque command allocated to regenerative braking may be a negative torque command value that serves as the aforementioned accelerating/decelerating command that may influence the corresponding traction motor unit(s) 6, 6. The accelerator manipulation unit 16 may include a pedal such as an accelerator pedal and a sensor configured to sense the depression of the accelerator pedal. The brake manipulation unit 17 may include a pedal such as a brake pedal and a sensor 17a configured to sense the depression of the pedal. The steering unit 15 may include a steering wheel and a sensor configured to sense the rotational angle of the steering wheel. A battery unit 19, which may include a secondary battery, may serve as a power source that powers the driving of the motor unit 6 and the entire electrical system of the vehicle.

The braking controller unit 23, which may include a customized electronic control unit (ECU), may be configured to receive from the torque allocator 48 a braking torque command allocated to the operation of the mechanical brakes and to allocate appropriate braking torque command values to the mechanical brakes 9 equipped to the respective wheels 2, 3.

As shown in Fig. 2, an inverter unit 22 includes a power circuitry 28 serving as a power converter circuitry, which may be provided one for each of the motor units 6, and a motor control circuitry 29 configured to control the power circuitry/circuitries 28. The motor control circuitry 29 may be configured to send various information related to the in-wheel motor system 8 held by the motor control circuitry 29, such as a variety of detected values or various control values, to the ECU 21.

The power circuitry 28 includes an inverter 31 configured to convert a DC power from a battery unit 19 into a three-phase AC power used to drive the motor unit 6 and also includes a PWM driver 32 configured to control the inverter 31.

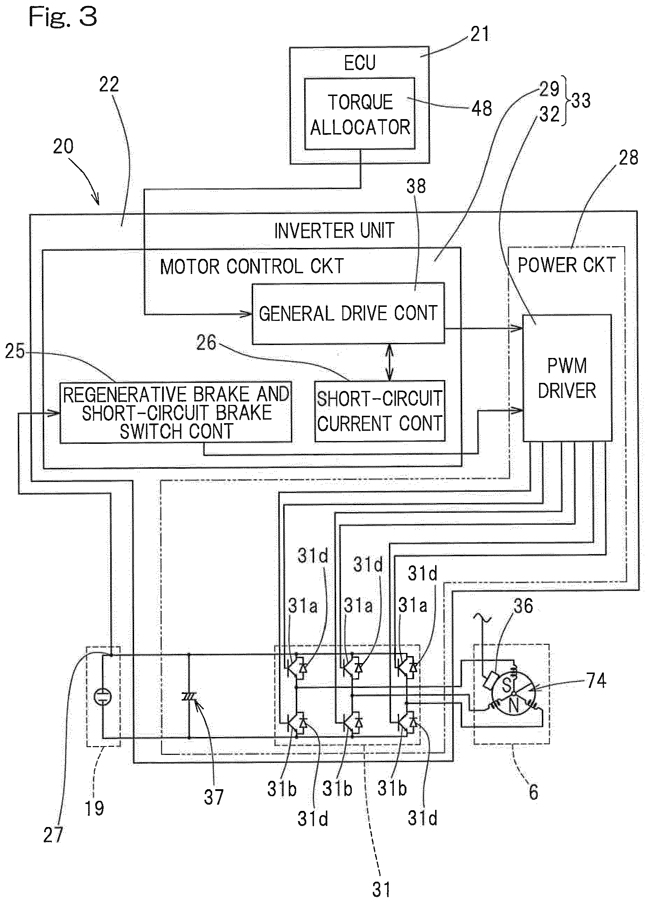

The motor unit 6 such as shown in Fig. 3 may include a three-phase synchronous motor such as an IPM (Interior Permanent Magnet) synchronous motor. The inverter 31 may include a plurality of drive devices 31a, 31b serving as semiconductor switching devices. The drive devices 31a, 31b may each be switched on or off to provide various combinations of switched-on device(s) and switched-off device(s) to produce drive current pulses for the corresponding three phases (U phase, V phase and W phase) of the motor unit 6.

The inverter 31 may include a positive voltage side and a negative voltage side, both connecting to the battery unit 19. The inverter 31 may include three lines that are connected in parallel with each other between the positive and negative voltage sides, with the three lines being assigned to the corresponding three phases of the motor unit 6. The drive devices 31a, 31b in the inverter 31 may be arranged such that each of the three lines includes two drive devices 31a, 31b coupled in series. The node between the two drive devices 31a, 31b coupled in series may be connected with the coils of the corresponding one of the aforementioned three phases of the motor unit 6. Each of the drive devices 31a, 31b may be coupled in parallel with a diode 31d which may be a flywheeling diode. A smoothing circuit segment 37, which may include a smoothing capacitor, may be coupled between the positive and negative voltage sides.

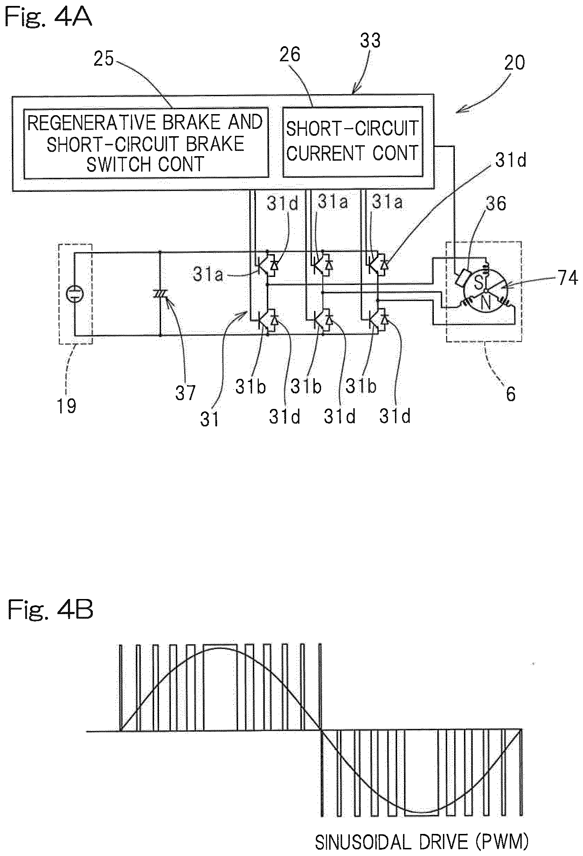

Referring to Fig. 4A which shows the electrical circuitry of Fig. 3 on an enlarged scale, the inverter 31 may include drive devices 31a, 31b serving as semiconductor switching devices as just discussed and may also include flywheeling diodes 31d. The inverter 31 may be a circuit with a connection configuration that is switchable among: (a) a drive operative connection configuration that allows a motor unit 6 to be driven with power supplied from a battery unit 19; and (b) a regenerative braking connection configuration that allows power generated by the motor unit 6 during a regenerative braking operation to be used to charge the battery unit 19. The drive devices 31a, 31b may be all switched off, thus creating a diode bridge of the flywheeling diodes 31d in the inverter 31 that may rectify an AC power generated by the motor unit 6 to provide (b) the regenerative braking connection configuration.

The PWM driver 32 may be configured to perform pulse width modulation on a received current command by generating ON/OFF commands to the drive devices 31a, 31b. The pulse width modulation (PWM) may be performed to produce a current output that provides sinusoidal drive such as shown in Fig. 4B. The motor control circuitry 29, together with the PWM driver 32 that may serve as a light current circuit segment in the power circuitry 28, may form a computation segment 33 that serves as a light current circuit segment in the inverter unit 22. The computation segment 33 may include a computer, programs that may be executed by the computer, and various electronic circuits.

The motor unit 6 may include an angle sensor 36 that may be configured to sense a motor angle -- more specifically, an angle of a motor rotor of the motor unit 6. The angle sensor 36 may include a highly precise sensor device such as a resolver. As shown in Fig. 2, the wheel bearing unit 4 or a support structure such as a knuckle (not shown) that supports the wheel bearing unit 4 may include a sensor 24 configured to sense a rotational frequency of a wheel 2, i.e., a rotational speed of a wheel 2.

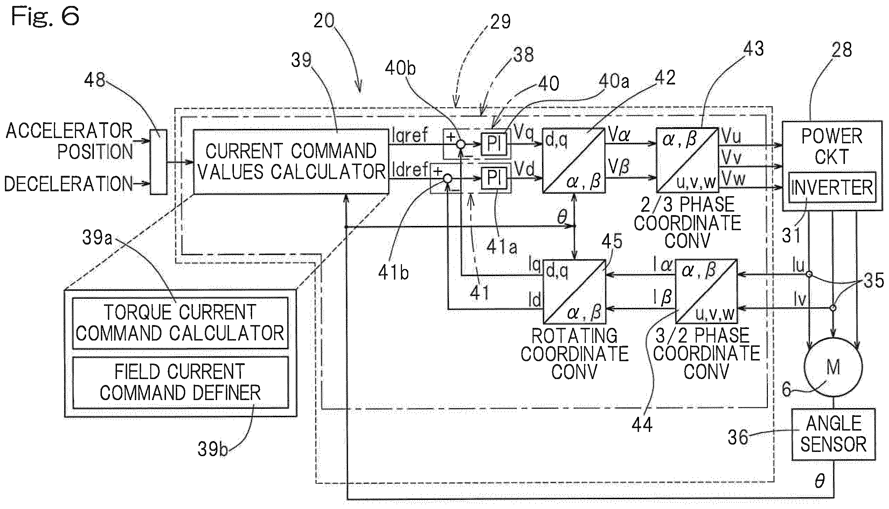

Referring to Fig. 2 and Fig. 3, the motor control circuitry 29 in the inverter unit 22 may include a general drive controller 38. The general drive controller 38 may be configured to perform control based on the position of magnetic poles. The position of magnetic poles may be determined with a detection value indicating an angle produced from the angle sensor 36 that may be included in the motor unit 6. The motor control circuitry 29 may perform vector control. Vector control is a control scheme that may use a torque current and a field current (i.e., flux current) and may control the torque current and the filed current independently of each other to provide control with quicker response and improved accuracy. Fig. 6 shows the general drive controller 38.

Referring to Fig. 6, the general drive controller 38 may include a current command values calculator 39, a torque current controller 40, a field current controller 41, an α, β coordinate converter 42, a two-to-three phase coordinate converter 43, a three-to-two phase coordinate converter 44 and a rotating coordinate converter 45, with the three-to-two phase coordinate converter 44 and the rotating coordinate converter 45 being arranged where they can process detection results or sensing results as illustrated.

The current command values calculator 39 may include a torque current command calculator 39a and a field current command definer 39b, as illustrated in Fig. 6 by a block showing its internal configuration. The torque command calculator 39a may be configured to produce a torque current command value Iqref, based on a torque command value that may be produced from a higher-level unit as well as on an angle as determined with the angle sensor 36, to eventually give rise to AC waveforms of respective certain phase patterns. Such a higher-level unit may be the ECU 21. In a configuration where the ECU 21 includes the torque allocator 48, such a higher-level unit may be the torque allocator 48. The torque command value that may be produced from a higher-level unit may be calculated based on the accelerator position and a decelerating signal from the brake manipulation unit 17. The field current command definer 39b may be configured to produce a predetermined field current command value Idref. Such a field current command value Idref can be appropriately defined according to, for example, characteristics of the motor unit 6. Such a field current command value Idref may be defined as "zero." A torque current may hereinafter be referred to as a "q-axis current." A field current may hereinafter be referred to as a "d-axis current." Similarly, a torque voltage may be hereinafter referred to as a "q-axis voltage." A field voltage may hereinafter be referred to as a "d-axis voltage." A q-axis is an axis defining a rotational direction of the motor unit, and a d-axis is an axis defining a direction perpendicular to the q-axis.

The torque current controller 40 may be configured to receive the q-axis current command value Iqref from the current command values calculator 39, to perform control that causes a q-axis current detection value Iq to follow the received q-axis current command value Iqref, and to produce a q-axis voltage command value Vq as an output. The q-axis current detection value Iq may be obtained in the following manner: A current sensor 35 may be configured to sense drive current(s) of the motor unit 6 and to produce sensing value(s), and the corresponding sensing value may be processed by the three-to-two phase coordinate converter 44 and the rotating coordinate converter 45 to determine the q-axis current detection value Iq. The torque current controller 40 may include a calculator 40a and a subtractor 40b. The subtractor 40b may be configured to subtract the q-axis current detection value Iq from the q-axis current command value Iqref. The calculator 40a may be configured to perform a certain computation on the output of the subtractor 40b. In the example under discussion, the calculator 40a may perform an integration on the output of the subtractor 40b.

The field current controller 41 may be configured to receive the d-axis current command value Idref from the current command values calculator 39, to perform control that causes a d-axis current detection value Id to follow the received d-axis current command value Idref, and to produce a d-axis voltage command value Vd as an output. The d-axis current detection value Id may be obtained in the following manner: A current sensor 35 may be configured to sense drive current(s) of the motor unit 6 and to produce sensing value(s), and the corresponding sensing value may be processed by the three-to-two phase coordinate converter 44 and the rotating coordinate converter 45 to determine the d-axis current detection value Id. The field current controller 41 may include a calculator 41a and a subtractor 41b. The subtractor 41b may be configured to subtract the d-axis current detection value Id from the d-axis current command value Idref. The calculator 41a may be configured to perform a certain computation on the output of the subtractor 41b. In the example under discussion, the calculator 41a may perform an integration on the output of the subtractor 41b.

The three-to-two phase coordinate converter 44 may be configured to convert the sensing values of two or three of U phase, V phase and W phase currents of the motor unit 6 (e.g., sensing values of the U phase current Iu and V phase current Iv) into detection values Iα, Iβ indicating the respective actual currents of static two-phase orthogonal coordinate components (i.e., an actual current along an α-axis and an actual current along a β-axis). The rotating coordinate converter 45 may be configured to, based on the angle θ of the motor rotor of the motor unit as sensed by the angle sensor 36, convert the aforementioned detection values Iα, Iβ indicating the respective actual currents of the static two-phase orthogonal coordinate components, into the q-axis and d-axis current detection values Iq, Id.

The α, β coordinate converter 42 may be configured to, based on the angle θ of the motor rotor of the motor unit as sensed by the angle sensor 36 (i.e., the phase of the motor rotor), convert the q-axis voltage command value Vq and the d-axis voltage command value Vd into the respective actual voltage command values Vα, Vβ of fixed two-phase coordinate components. The two-to-three phase coordinate converter 43 may be configured to convert the actual voltage command values Vα, Vβ produced from the α, β coordinate converter 42 into three-phase AC voltage command values Vu, Vv, Vw to control the corresponding U, V and W phases of the motor unit 6.

The power circuitry 28 may receive the voltage command values Vu, Vv, Vw produced from the two-to-three phase coordinate converter 43 in the general drive controller 38 and perform power conversion of the received voltage command values Vu, Vv, Vw to produce drive currents Iu, Iv, Iw of the motor unit.

In the embodiment under discussion, the inverter 31 is the aforementioned circuit with a switchable connection configuration, and the switchable connection configuration can be switched to (c) a short-circuit connection configuration that causes motor coils of the motor unit 6 to short-circuit to create a braking force. Furthermore, the motor control circuitry 29 includes a regenerative braking and short-circuit braking switching controller 25 as well as a short-circuit current controller 26, as described below.

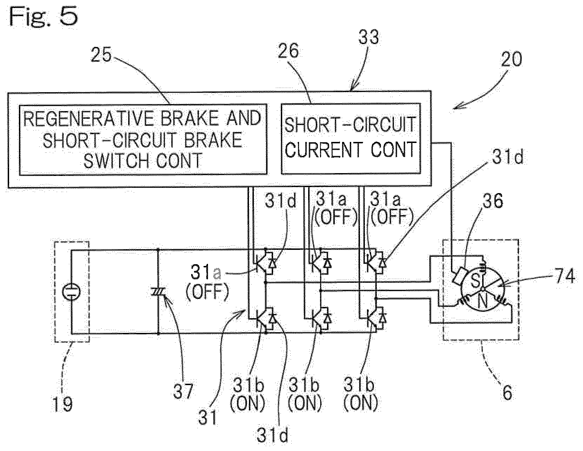

The inverter 31 as the aforementioned circuit with a switchable connection configuration may include six drive devices 31a, 31b as illustrated. In such a case, the three drive devices 31a located closer to the positive voltage side (i.e., the upper side of the plane of the figure) may be all switched off and the three drive devices 31b located closer to the negative voltage side (i.e., the lower side of the plane of the figure) may be all switched on, as shown in Fig. 5, to cause motor coils of the motor unit 6 to short-circuit.

The connection configuration of the inverter 31 may be switched among: (a) a drive operative connection configuration that allows a motor unit to be driven with an AC power; (b) a regenerative braking connection configuration; and (c) a short-circuit connection configuration such as shown in Fig. 5. The drive devices 31a, 31b of the inverter 31 may each be switched on or off to successively change the combination of switched-on device(s) and switched-off device(s) to create a torque that is positive or negative with respect to the rotational direction of the motor unit, thus providing (a) the drive operative connection configuration and (b) the regenerative braking connection configuration, respectively. The PWM driver 32 or an additional circuit segment (not shown) in the power circuitry 28 may be configured to, in response to a switching signal produced from a unit or circuit external to the power circuitry 28, cause the connection configuration of the inverter 31 to be switched among the aforementioned connection configurations (a), (b) and (c). A regenerative braking connection configuration may be equivalent to a drive operative connection configuration with a negative output power.

In the drive operative connection configuration, the motor unit 6 may be driven with power supplied from the battery unit 19, thus producing a positive output power. In the regenerative braking connection configuration, the motor unit 6 may generate power (i.e., serve as a power generator) and supply it to the battery, thus producing a negative output power. In the short-circuit connection configuration, the motor unit 6 may generate power (i.e., serve as a power generator) that is dissipated in the motor unit 6 (i.e., an internal loss in a power generator) and the inverter. With the drive devices 31a, 31b being all switched off, the output power of the motor unit becomes zero. At this point, the motor rotor of the motor unit 6 is free to rotate.

The regenerative braking and short-circuit braking switching controller 25 may produce and send a switching command to the power circuitry 28 including the inverter 31, which causes the switching from (b) the regenerative braking connection configuration to (c) the short-circuit connection configuration, or vise versa. In the embodiment under discussion, if a regenerative braking command such as a negative torque command value is transmitted for controlling the inverter 31, the regenerative braking and short-circuit braking switching controller 25 may perform the following operation(s): the regenerative braking and short-circuit braking switching controller 25 may produce and send a switching command to the power circuitry 28, which causes the connection configuration of the inverter 31 to be switched to (b) the regenerative braking connection configuration, if a fully charged state of the battery unit 19 is not detected with a charging level detector 27 that may be configured to sense the charging level of the battery unit 19, and may produce and send a switching command to the power circuitry 28, which causes the connection configuration of the inverter 31 to be switched to (c) the short-circuit connection configuration, if a fully charged state of the battery unit 19 is detected with the charging level detector 27. The charging level detector 27 may include a voltmeter configured to measure the voltage of the battery unit 19. The charging level detector 27 may be configured to determine a fully charged state of the battery unit 19, if the measured voltage of the battery unit 19 is equal to or greater than a predetermined voltage. The regenerative braking and short-circuit braking switching controller 25 may be configured to, in response to a switching signal command from the ECU 21 which is a higher-level unit or in response to a manual input via a manual input device (not shown), cause the connection configuration to be switched in the aforementioned manner.

The short-circuit current controller 26 may control a short-circuit current of the motor unit 6 when the connection configuration of the inverter 31 as the aforementioned circuit with a switchable connection configuration is (c) the short-circuit connection configuration. The short-circuit current controller 26 may controllably adjust the short-circuit current of the motor unit 6 to a certain current value according to a negative braking torque command value that may be sent from the torque allocator 48 that may be included in the ECU 21. In the embodiment under discussion, the short-circuit current controller 26 may control the short-circuit current through pulse width modulation drive, and the short-circuit current controller 26 may utilize vector control that uses a torque current and a field current to control the short-circuit current through pulse width modulation drive. In particular, the short-circuit current controller 26 may perform the aforementioned control of a short-circuit current via the general drive controller 38 which may be configured to perform vector control such as shown in Fig. 6.

Such control of a short-circuit current through pulse width modulation drive may include simultaneously switching on or off all of the illustrated three drive devices 31b located closer to the negative voltage side to control the pulse width corresponding to the time in which the drive devices 31b are switched on, when the connection configuration of the inverter 31 is (c) a short-circuit connection configuration such as shown in Fig. 5.

Vector control of the short-circuit current may include causing the current command values calculator 39 to produce a torque current command value Iqref according to a received braking command and produce a predetermined field current command value Idref, when the switchable connection configuration of the inverter 31 is (c) a short-circuit connection configuration such as shown in Fig. 5. In particular, the field current command value Idref may be defined as zero, while the torque current command value Iqref may be determined according to a received braking command. The short-circuit current controller 26 such as shown in Fig. 2 and Fig. 3 may be configured to cause the torque current command value Iqref and the field current command value Idref to be defined or determined in such a manner.

In the aforementioned configuration of the motor drive device 20, the regenerative braking and short-circuit braking switching controller 25 may cause the connection configuration of the inverter 31 as the aforementioned circuit with a switchable connection configuration to be switched to (c) the short-circuit connection configuration that causes motor coils of the motor unit 6 to short-circuit. Short-circuiting the motor coils of the motor unit 6 would create a significant braking force. However, merely short-circuiting the motor coils may result in the generation of excessively large braking torque, thus leading to abrupt braking of a vehicle. In order to address this, the short-circuit current controller 26 may control a short-circuit current that flows when the connection configuration of the inverter 31 is (c) the short-circuit connection configuration, in such a way to cause only a required torque to be generated in the motor unit 6, thus creating a desired braking torque without leading to abrupt braking of a vehicle. The regenerative braking and short-circuit braking switching controller 25 may cause the connection configuration of the inverter 31 to be switched back to (b) the regenerative braking connection configuration, to allow for performing a standard regenerating braking operation.

The provision of such a regenerative braking and short-circuit braking switching controller 25 enables switching of the connection configuration of the inverter 31 from (b) the regenerative braking connection configuration to (c) the short-circuit connection configuration, or vise versa, and the provision of such a short-circuit current controller 26 enables controlling a short-circuit braking operation. In this way, a braking operation can be performed with a motor unit 6 even when a battery unit 19 is fully charged. Thus, in many situations, a braking force created in a motor unit 6 can be used to brake an electric vehicle or any machine equipped with a motor or motor unit. This also allows for advantageously limiting the use of mechanical brake(s) 9 to auxiliary purposes, such as a final touch to ensure the stopping of a vehicle during a braking operation or an assist for a braking operation with a motor unit 6. This in turn allows for the provision of smaller mechanical brake(s) or even the omission of mechanical brake(s). When applied to an electric vehicle, switching to a short-circuit braking operation with a motor unit 6 may be carried out, if a battery unit is fully charged, to brake the electric vehicle when driving down a long slope. This can minimize the braking load on mechanical brake(s) 9, thus reducing or preventing the heat that may be generated by friction braking with the mechanical brake(s) 9. A short-circuit braking operation may heat the motor unit 6 through dissipation of generated power. Nevertheless, it usually takes a considerable time for the motor unit 6 to overheat, thus making a short-circuit braking operation a practical choice.

A battery unit 19 may often be fully charged, where a regenerative braking operation may no longer be possible. In the aforementioned configuration where the charging level detector 27 is provided, however, the connection configuration of the inverter 31 may be switched to (c) the short-circuit connection configuration, in response to detection of a fully charged state of the battery unit 19, thus allowing for performing a braking operation with the motor unit 6 through the formation of short-circuit(s). Switching to (c) the short-circuit connection configuration may be automatic, thus preventing the sudden occurrence of inadequate braking force due to a fully charged battery unit 19.

In the embodiment under discussion, the aforementioned circuit with a switchable connection configuration is the inverter 31. The motor unit 6 may include a synchronous motor. A synchronous motor such as an interior magnet synchronous motor may be driven with an AC power that may be converted by the inverter 31 from a DC power supplied from a battery unit 19. An inverter 31 may include a combination of a plurality of drive devices 31a, 31b serving as switching devices and freewheeling diodes 31d each connected in parallel with the corresponding one of the switching devices 31a, 31b. The drive devices 31a, 31b may be opened or closed to form various combinations of open states and closed states that implement the inverter 31 as the aforementioned circuit with a switchable connection configuration. The configuration where the aforementioned circuit with a switchable connection configuration is an inverter 31 can eliminate the need to provide a customized circuit that serves as the aforementioned circuit with a switchable connection configuration.

The short-circuit current controller 26 may control a short-circuit current through pulse width modulation drive. Pulse width modulation drive enables performing, with a simplified circuit configuration, a precise short-circuit current control.

In the embodiment under discussion, the short-circuit current controller 26 may utilize vector control that uses a torque current and a field current to control a short-circuit current through pulse width modulation drive. Vector control that uses a torque current and a field current enables performing a precise short-circuit current control, thus causing accurate short-circuit braking to achieve a desired braking operation.

An electric vehicle may include motor drive device(s) 20 of the aforementioned configuration. Such an electric vehicle may also include motor unit(s) 6 that form(s) in-wheel motor system(s) 8. In a configuration where the electric vehicle includes in-wheel motor system(s) 8, each wheel of the electric vehicle may be equipped with a motor unit 6 that operates independently of other motor unit(s) 6. This allows for splitting among the respective motor units 6 the total energy required (or the braking load) to perform the aforementioned short-circuit braking operation. The electric vehicle may also include a reducer unit 7 that comprises a cycloidal reducer. A cycloidal reducer has a significant reduction ratio. Thus, in a configuration where the reducer unit 7 comprises a cycloidal reducer, an electric vehicle can be braked more effectively by the short-circuit braking operation with the motor unit(s) 6.

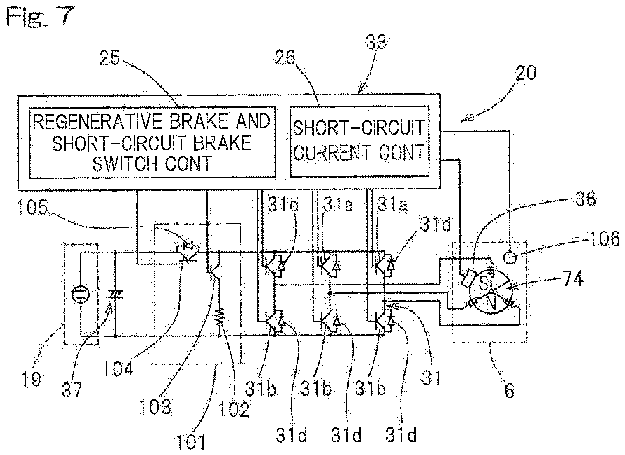

Fig. 7 shows the second embodiment of the present invention. The description of the first embodiment in connection with Fig. 1 to Fig. 6 can be applied to some of the features of the second embodiment, and the description of these features of the second embodiment will be omitted to avoid redundancy. The second embodiment differs from the first embodiment by the following features which will be discussed below.

In the embodiment under discussion, a resistor braking circuit 101 may further be provided which includes a power resistor 102 and a switch 103, 104 that may be connected in series with the power resistor. The resistor braking circuit 101 may be disposed external to the motor unit 6. The power resistor 102 may be operable to dissipate power generated by the motor unit 6 to create a braking force in the motor unit. The regenerative braking and short-circuit braking switching controller 25 may be operable to control the circuit 31 with a switchable connection configuration as well as the switch 103, 104 to provide (d) a resistor braking configuration that allows a current generated by the motor unit 6 to flow into the resistor braking circuit 101. The regenerative braking and short-circuit braking switching controller 25 may be configured to cause switching among (b) the regenerative braking connection configuration, (c) the short-circuit connection configuration and (d) the resistor braking configuration, or switching among (b) the regenerative braking connection configuration, (c) the short-circuit connection configuration, (d) the resistor braking configuration and (c+d) a combination of the short-circuit connection configuration and the resistor braking configuration.

A short-circuit braking operation may heat the motor unit 6 through dissipation of generated power and may result in an elevated temperature of the motor unit, where the short-circuit braking operation may longer be effective. In the aforementioned configuration, however, the power resistor 102 may be arranged external to the motor unit 6. Thus, even when a regenerative braking operation is not available due to a fully charged battery unit and a short-circuit braking operation is not effective as well, a braking operation with the motor unit 6 can still be performed by utilizing (i) the combination of short-circuit braking and additional braking that uses the aforementioned power resistor 102 or (ii) only the braking that uses the aforementioned power resistor 102. The braking that uses the power resistor 102 may be enabled or disabled as necessary through the switch 103, 104. The power resistor 102 can be used as an assist for a short-circuit braking operation. Thus, the heat that may be dissipated by the power resistor 102 in the aforementioned configuration can be -- in contrast to a configuration where there is no short-circuit braking option and the braking that uses the power resistor 102 is the only choice available to perform a braking operation with the motor unit 6 when a regenerative braking operation is no longer possible -- relatively small. This allows for the provision of a simpler heat removal structure and can also eliminate the need to increase the size of the motor drive device to install the power resistor 102.

In a configuration where the power resistor 102 is provided, the regenerative braking and short-circuit braking switching controller 25 may be configured to, if a fully charged state of the battery unit 19 is detected with a charging level detector 27 (Fig. 2) which is configured to detect whether a charging level of the battery unit 19 is equal to or greater than a predefined charging level, where a charging level equal to or greater than the predefined charging level corresponds to a fully charged state of the battery unit 19, cause the connection configuration of the circuit 31 to be switched to one of (c) the short-circuit connection configuration and (d) the resistor braking configuration, or to one of (c) the short-circuit connection configuration, (d) the resistor braking configuration and (c+d) the combination of the short-circuit connection configuration and the resistor braking configuration, depending on which one of temperature zones that a temperature of the motor unit belongs to, with the temperature of the motor unit being sensed by a motor temperature sensor 106 configured to sense a temperature of the motor unit. In the aforementioned configuration, the charging level detector 27 (Fig. 2) that may be configured to sense a charging level of the battery unit 19 is provided. The motor temperature sensor 106 is provided as well. Depending on the detection and/or sensing results, the regenerative braking, the short-circuit braking, and/or the resistor (dissipating) braking may be selected to perform an appropriate braking operation that does not cause an excessive braking load on the motor unit 6 and etc.

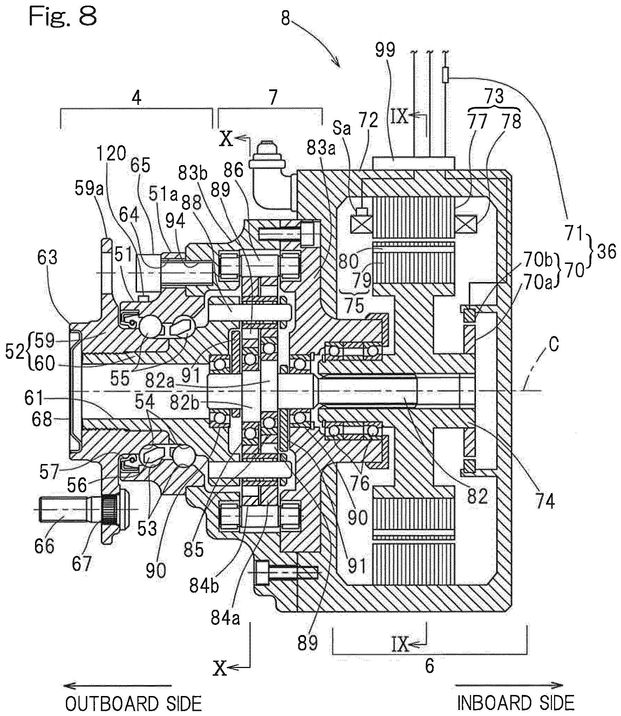

A particular configuration that the in-wheel motor system 8 may take in any one of the preceding embodiments will now be discussed in connection with Fig. 8 to Fig. 11. The illustrated in-wheel motor system 8 includes a wheel bearing unit 4, a motor unit 6 and a reducer unit 7 interposed between the wheel bearing unit 4 and the motor unit 6, in which the hub of a drive wheel 2 supported by the wheel bearing unit 4 is coaxially coupled with a rotational output shaft 74 of the motor unit 6. The illustrated reducer unit 7 includes a cycloidal reducer which includes a rotational input shaft 82 coaxially connected to the rotational output shaft 74 of the motor unit 6. The rotational input shaft 82 has eccentric segments 82a, 82b. The cycloidal reducer also includes curvilinear plates 84a, 84b mounted via respective bearings 85 to the eccentric segments 82a, 82b, in such a way to transmit the eccentric motions of the curvilinear plates 84a, 84b in the form of a rotary motion to the wheel bearing unit 4. It is to be noted that hereinafter in this specification, terms "outboard" and "inboard" represent one side of the vehicle body away from the longitudinal center of the vehicle body and the other side of the vehicle body close to the longitudinal center of the vehicle body, respectively, when assembled in the vehicle body.

The wheel bearing unit 4 includes an outer member 51 having an inner periphery formed with a plurality of rows of raceway surfaces 53, an inner member 52 having an outer periphery formed with raceway surfaces 54 held in face to face relation to those raceway surfaces 53, and a plurality of rows of rolling elements 55 that are interposed between the raceway surfaces 53 of the outer member 51 and the raceway surfaces 54 of the inner member 52. The inner member 52 concurrently serves as a hub for mounting a drive wheel. The illustrated wheel bearing unit 4 includes a double row angular contact ball bearing, in which the rolling elements 55 are in the form of balls rollingly retained by a retainer 56 that is provided one for each row of the balls. The raceway surfaces 53 and 54 have arcuate cross sectional shapes and are formed to have respective contact angles held in back-to-back relation with each other. The outer member 51 and the inner member 52 define an annular bearing space therebetween, and an outboard end of the annular bearing space is sealed by a sealing member 57.

The outer member 51, which serves as a stationary member, is of one piece construction having a flange 51a for attaching to an outboard housing 83b of the reducer unit 7. The flange 51a has bolt insertion holes 64 formed at a plurality of circumferential locations thereof. The housing 83b has bolt receiving holes 94 that are internally threaded at locations thereof corresponding to the respective bolt insertion holes 64. The outer member 51 can be mounted to the housing 83b by screwing into the bolt receiving holes 94 the mounting bolts 65 that are pre-inserted in the bolt insertion holes 64.

The inner member 52, which serves as a rotational member, includes an outboard member 59 having a hub flange 59a for attaching a wheel. The inner member 52 also includes an inboard member 60 which has an outboard side fitted to an inner periphery of the outboard member 59 and which is crimped to be integrated with the outboard member 59. The outboard member 59 and the inboard member 60 have the corresponding rows of the raceway surfaces 54 formed thereon. The inboard member 60 has a center thereof formed with a through bore 61. The hub flange 59a has force-fitting holes 67 at a plurality of circumferential locations thereof for receiving corresponding hub bolts 66. The outboard member 59 has a cylindrical pilot portion 63 for guiding a drive wheel and brake components (both not shown), which is located in the vicinity of the root of the hub flange 59a of the outboard member 59 and is protruding towards the outboard side. A cap 68 closing an outboard end of the through bore 61 is fitted to an inner periphery of the pilot portion 63.

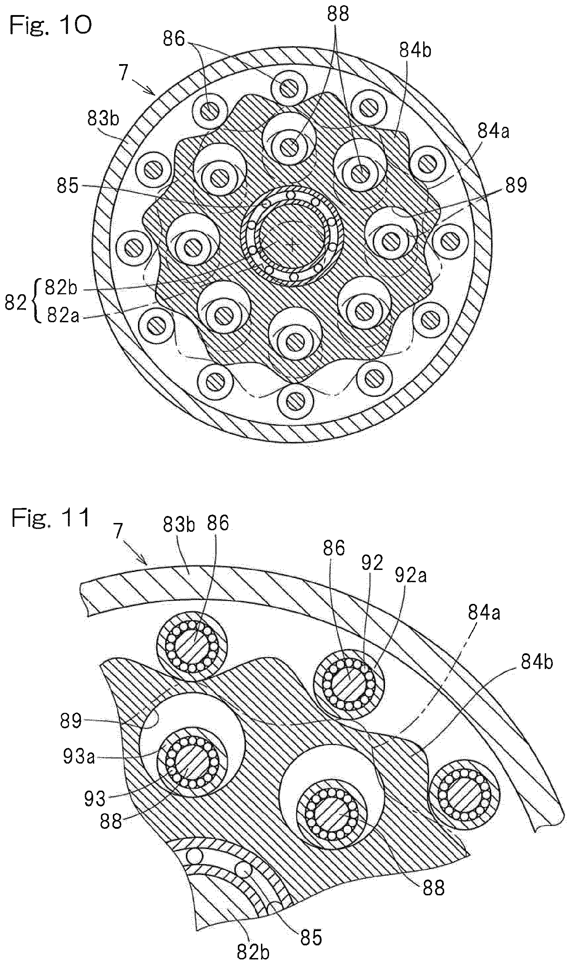

The illustrated reducer unit 7 includes a cycloidal reducer as described. As shown in Fig. 10, the cycloidal reducer includes two curvilinear plates 84a, 84b, each having an outer contour defined by a smoothly corrugated trochoidal curve, that are mounted via respective bearings 85 to the eccentric segments 82a, 82b of the rotational input shaft 82. A plurality of outer pins 86 are fitted to the housing 83b to directly or indirectly guide, along the outer peripheries thereof, the eccentric motions of the curvilinear plates 84a and 84b. A plurality of inner pins 88, which are fitted to the inboard member 60 of the inner member 52, are inserted to a plurality of corresponding, round through holes 89 formed in each of the curvilinear plates 84a and 84b, to directly or indirectly engage with the through holes 89. The rotational input shaft 82 is splinedly connected to the rotational output shaft 74 of the motor unit 6 for co-rotation. The rotational input shaft 82 is supported on both sides thereof, via two bearings 90, by an inboard housing 83a and by an inner diameter surface of the inboard member 60 of the inner member 52, respectively.

Rotation of the rotational output shaft 74 of the motor unit 6 causes the curvilinear plates 84a, 84b, associated with the rotational input shaft 82 that co-rotates with the rotational output shaft 74, to make eccentric motions. The eccentric motions of the curvilinear plates 84a, 84b are, through the inner pins 88 directly or indirectly engaging with the through holes 89, transmitted in the form of a rotary motion to the inner member 52. The speed of rotation of the inner member 52 is reduced with respect to that of rotation of the rotational output shaft 74. For example, a single-stage reducer unit having such a configuration can achieve a reduction ratio of 1/10 or greater.

The two curvilinear plates 84a, 84b are mounted, 180° out of phase with each other, to the eccentric segments 82a and 82b of the rotational input shaft 82, so that the eccentricity of the motions of the curvilinear plates 84a, 84b can be cancelled. Counterweights 91 associated with the respective eccentric segments 82a, 82b, are each disposed at a side of the corresponding one of the eccentric segments 82a, 82b, in such a way that the counterweights 91 face each other across the eccentric segments 82a, 82b while each of the counterweights 91 being displaced in a direction opposite to the direction of displacement of the corresponding one of the eccentric segments 82a, 82b. In this way, vibrations that may be caused by the curvilinear plates 84a, 84b can be cancelled out.

As shown on an enlarged scale in Fig. 11, bearings 92 and bearings 93 may be fitted to the outer pins 86 and the inner pins 88, respectively. The outer rings 92a of the bearings 92 are in rolling contact with the outer peripheries of the curvilinear plates 84a, 84b, while the outer rings 93a of the bearings 93 are in rolling contact with the inner peripheries of the through holes 89. This can minimize the contact friction between the outer pins 86 and the outer peripheries of the curvilinear plates 84a, 84b and the contact friction between the inner pins 88 and the inner peripheries of the through holes 89, thus allowing for smoother transmission of the eccentric motions of the curvilinear plates 84a, 84b in the form of a rotary motion to the inner member 52.

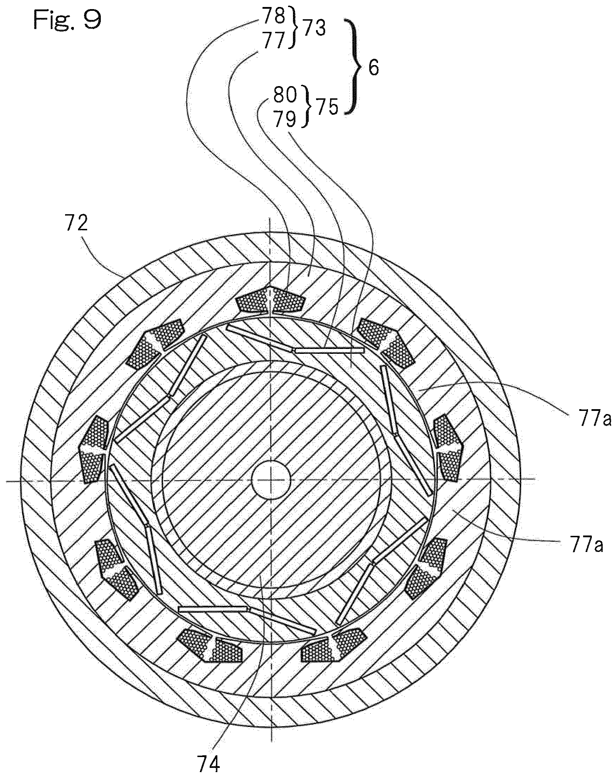

As shown in Fig. 9, the motor unit 6 includes a radial-gap type, IPM motor that includes a motor stator 73 fitted to a cylindrical motor housing 72 and also includes a motor rotor 75 mounted to the rotational output shaft 74, with a radial gap provided between the motor stator 73 and the motor rotor 75. The rotational output shaft 74 is cantilevered via two bearings 76 to a cylindrical segment of the inboard housing 83a of the reducer unit 7.

The motor stator 73 includes a stator core body 77 made of soft magnetic material and also includes coils 78. An outer peripheral surface of the stator core body 77 is fitted to the inner peripheral surface of the motor housing 72. In this way, the stator core body 77 is supported by the motor housing 72. The motor rotor 75 includes a rotor core body 79 mounted onto the rotational output shaft 74 to be coaxial with the motor stator 73 and also includes a plurality of permanent magnets 80 incorporated in the rotor core body 79. The permanent magnets 80 may be arranged in a V-shaped configuration.

The motor unit 6 may be associated with an angle sensor 36 that may be configured to sense a rotational angle of the motor rotor 75 relative to the motor stator 73. The angle sensor 36 includes an angle sensor body 70 configured to sense signals representing a rotational angle of the motor rotor 75 relative to the motor stator 73 for output and also includes an angle calculation circuit 71 configured to calculate a rotational angle based on the signals produced from the angle sensor body 70. The angle sensor body 70 includes a detectable element 70a associated with the outer peripheral surface of the rotational output shaft 74 and also includes a detector element 70b associated with the motor housing 72. For example, the detector element 70b may be positioned adjacent the detectable element 70a in a radially opposed fashion. The detectable element 70a and the detector element 70b may be positioned adjacent each other in an axially opposed fashion.

Here, the angle sensor 36 may include a magnetic encoder or a resolver. Control of the rotation of the motor unit 6 may be carried out by the aforementioned motor control circuitry 29 (e.g., see Fig. 2, Fig. 5 and Fig. 7).

A connector 99 may be formed at the motor housing 72 for connection of the wires for a motor current in the in-wheel motor system 8, wires for various sensors, wires for various commands, and etc.

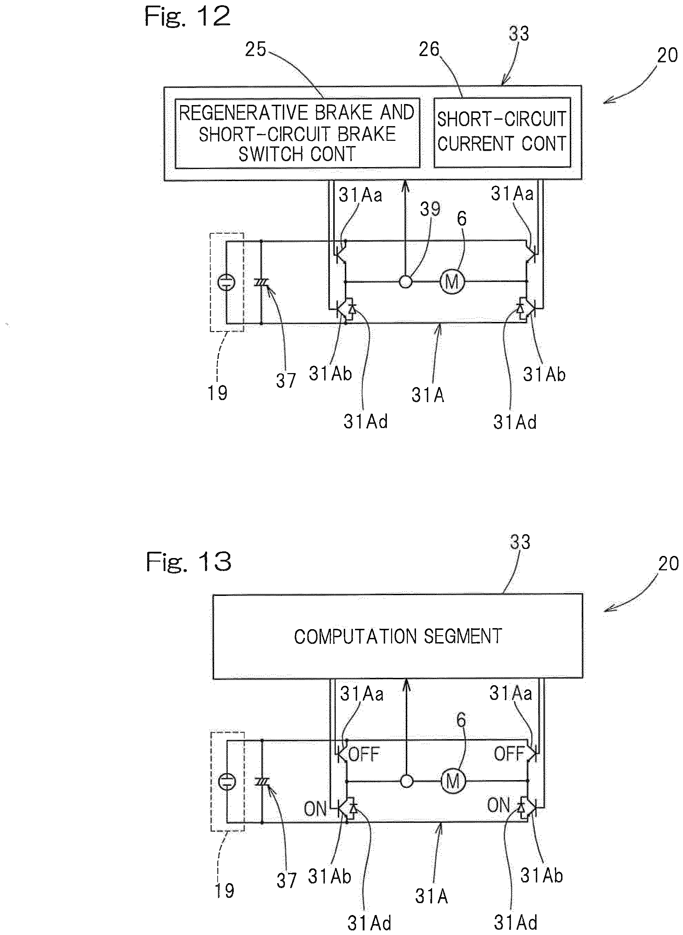

Fig. 12 and Fig. 13 show the third embodiment of the present invention, in which the motor unit 6 includes a DC motor. The aforementioned circuit 31A with a switchable connection configuration may include four drive devices 31Aa, 31Ab serving as switching devices and diodes 31Ad as illustrated in Fig 12. In the embodiment under discussion, the drive devices 31Aa, 31Ab may be all switched off to provide the aforementioned regenerative braking connection configuration. The illustrated two drive devices 31Aa located closer to the positive voltage side may be switched off and the illustrated two drive devices 31Ab located closer to the negative voltage side may be switched on as shown in Fig. 13, to provide the aforementioned short-circuit connection configuration. The regenerative braking and short-circuit braking switching controller 25 may cause such switching. The short-circuit current controller 26 may be configured to change the duty cycle for the illustrated two drive devices 31Ab located closer to the negative voltage side to control a short-circuit current that flows when the aforementioned circuit 31A with a switchable connection configuration is the short-circuit connection configuration. Other features and advantages or effects may be the same as in the first embodiment.

In the description of the preceding embodiment(s), the embodiment(s) is/are applied to a four-wheel electric vehicle with two rear drive wheels being driven with the respective motor units that operate independently of each other. Nevertheless, the present invention can also be applied to, for example, an electric vehicle with two front wheels being driven with the respective motor units that operate independently of each other, an electric vehicle with all of its four wheels being driven with the respective motor units that operate independently of each other, and an electric vehicle with its wheel(s) being driven with a single motor unit. A motor drive device according to the present invention can also be applied to, for example, an industrial machine.

Although the present invention has been described in connection with preferred embodiments with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Signs]

- 1:: Vehicle body
- 2, 3:: Wheel
- 4:: Wheel bearing unit
- 6:: Motor unit
- 7:: Reducer unit
- 8:: In-wheel motor system
- 19:: Battery unit
- 20:: Motor drive device
- 21:: ECU
- 22:: Inverter unit
- 25:: Regenerative braking and short-circuit braking switching controller
- 26:: Short-circuit current controller
- 27:: Charging level detector
- 28:: Power circuitry
- 29:: Motor control circuitry
- 31:: Inverter (Circuit with a switchable connection configuration)
- 32:: PWM driver
- 35:: Current sensor
- 36:: Angle sensor
- 102:: Power resistor
- 103, 104:: Switch
- 101:: Resistor braking circuit
- 106:: Motor temperature sensor

## Claims

1. A motor drive device comprising:
a circuit with a connection configuration that is switchable among:
(a) a drive operative connection configuration that allows a motor unit to be driven with power supplied from a battery unit;
(b) a regenerative braking connection configuration that allows power generated by the motor unit during a regenerative braking operation to be used to charge the battery unit; and
(c) a short-circuit connection configuration that causes motor coils of the motor unit to short-circuit to create a braking force;
a short-circuit current controller configured to control a short-circuit current that flows when the connection configuration of the circuit is (c) the short-circuit connection configuration;
a regenerative braking and short-circuit braking switching controller configured to perform control that causes the connection configuration of the circuit to be switched from (b) the regenerative braking connection configuration to (c) the short-circuit connection configuration, or vise versa; and
a resistor braking circuit including a power resistor and a switch connected in series with the power resistor, the resistor braking circuit being disposed external to the motor unit, the power resistor being operable to dissipate power generated by the motor unit to create a braking force in the motor unit,
wherein the regenerative braking and short-circuit braking switching controller is operable to control the circuit with a switchable connection configuration as well as the switch to provide (d) a resistor braking configuration that allows a current generated by the motor unit to flow into the resistor braking circuit, and
wherein the regenerative braking and short-circuit braking switching controller is configured to cause switching among (b) the regenerative braking connection configuration, (c) the short-circuit connection configuration and (d) the resistor braking configuration, or switching among (b) the regenerative braking connection configuration, (c) the short-circuit connection configuration, (d) the resistor braking configuration and (c+d) a combination of the short-circuit connection configuration and the resistor braking configuration, and
wherein the regenerative braking and short-circuit braking switching controller is configured to, if a fully charged state of the battery unit is detected with a charging level detector which is configured to detect whether a charging level of the battery unit is equal to or greater than a predefined charging level, where a charging level equal to or greater than the predefined charging level corresponds to a fully charged state of the battery unit, cause the connection configuration of the circuit to be switched to one of (c) the short-circuit connection configuration and (d) the resistor braking configuration, or to one of (c) the short-circuit connection configuration, (d) the resistor braking configuration and (c+d) the combination of the short-circuit connection configuration and the resistor braking configuration, depending on a temperature of the motor unit, with the temperature of the motor unit being sensed by a motor temperature sensor configured to sense a temperature of the motor unit.

2. The motor drive device as claimed in Claim 1, wherein the regenerative braking and short-circuit braking switching controller is configured to cause the connection configuration of the circuit to be switched to (c) the short-circuit connection configuration, if a fully charged state of the battery unit is detected with a charging level detector which is configured to detect whether a charging level of the battery unit is equal to or greater than a predefined charging level, where a charging level equal to or greater than the predefined charging level corresponds to a fully charged state of the battery unit.

3. The motor drive device as claimed in Claim 1, wherein the motor unit includes a synchronous motor and the circuit with a switchable connection configuration is an inverter.

4. The motor drive device as claimed in anyone of Claims 1 to 3, wherein the short-circuit current controller is configured to control a short-circuit current through pulse width modulation drive.

5. The motor drive device as claimed in Claim 1, wherein the short-circuit current controller is configured to utilize vector control that uses a torque current and a field current to control a short-circuit current through pulse width modulation drive.

6. The motor drive device as claimed in Claim 1, wherein the motor unit includes a traction motor to drive an electric vehicle.

7. An electric vehicle comprising a motor drive device as defined by anyone of Claims 1 to 6.

8. The electric vehicle as claimed in Claim 7, further comprising:
a motor unit;
a wheel bearing unit; and
a reducer unit,
wherein the motor unit, together with the wheel bearing unit and the reducer unit, forms an in-wheel motor system that is partly or entirely disposed within a wheel, the in-wheel motor system including the motor unit, the wheel bearing unit and the reducer unit.

9. The electric vehicle as claimed in Claim 8, wherein the reducer unit comprises a cycloidal reducer.

## Patentansprüche

1. Motorantriebsvorrichtung, umfassend:
eine Schaltung mit einer Verbindungskonfiguration, die umschaltbar ist zwischen:
(a) eine Antriebsbetriebsverbindungskonfiguration, die es ermöglicht, dass eine Motoreinheit mit Energie angetrieben wird, die von einer Batterieeinheit zugeführt wird;
(b) eine Verbindungskonfiguration für regeneratives Bremsen, die ermöglicht, dass von der Motoreinheit während eines regenerativen Bremsvorgangs erzeugte Energie zum Laden der Batterieeinheit verwendet wird; und
(c) eine Kurzschlussverbindungskonfiguration, die bewirkt, dass Motorspulen der Motoreinheit kurzgeschlossen werden, um eine Bremskraft zu erzeugen;
eine Kurzschlussstromsteuerung, die dazu konfiguriert ist, einen Kurzschlussstrom zu steuern, der fließt, wenn die Verbindungskonfiguration der Schaltung (c) die Kurzschlussverbindungskonfiguration ist;
eine Rückgewinnungsbrems- und Kurzschlussbremsumschaltsteuerung, die dazu konfiguriert ist, eine Steuerung durchzuführen, die bewirkt, dass die Verbindungskonfiguration der Schaltung von (b) der Rückgewinnungsbremsverbindungskonfiguration zu (c) der Kurzschlussverbindungskonfiguration oder umgekehrt umgeschaltet wird; und
eine Widerstandsbremsschaltung, die einen Leistungswiderstand und einen mit dem Leistungswiderstand in Reihe geschalteten Schalter enthält, wobei die Widerstandsbremsschaltung außerhalb der Motoreinheit angeordnet ist, wobei der Leistungswiderstand betreibbar ist, um von der Motoreinheit erzeugte Leistung zu dissipieren, um darin eine Bremskraft in der Motoreinheit zu erzeugen,
wobei die Rückgewinnungsbrems- und Kurzschlussbremsschaltsteuerung betreibbar ist, um die Schaltung mit einer schaltbaren Verbindungskonfiguration sowie den Schalter zu steuern, um (d) eine Widerstandsbremskonfiguration bereitzustellen, die es ermöglicht einem von der Motoreinheit erzeugten Strom, in der Widerstandsbremsschaltung zu fließen, und
wobei die Rückgewinnungsbrems- und Kurzschlussbremsumschaltsteuerung konfiguriert ist, um ein Umschalten zwischen (b) der Verbindungskonfiguration für regeneratives Bremsen, (c) der Kurzschlussverbindungskonfiguration und (d) der Widerstandsbremskonfiguration, oder Umschalten zwischen (b) der Verbindungskonfiguration für regeneratives Bremsen (c) der Kurzschlussverbindungskonfiguration, (d) der Widerstandsbremskonfiguration und (c + d) eine Kombination aus der Kurzschlussverbindungskonfiguration und der Widerstandsbremskonfiguration, und
wobei die Schaltsteuerung für regeneratives Bremsen und Kurzschlussbremsen dazu konfiguriert ist, wenn ein vollständig geladener Zustand der Batterieeinheit erfasst wird, mit einem Ladepegeldetektor, der konfiguriert ist zum Erfassen, ob ein Ladepegel der Batterieeinheit gleich oder größer als ist ein vordefinierter Ladepegel, wobei ein Ladepegel gleich oder größer als der vordefinierte Ladepegel einem vollständig geladenen Zustand der Batterieeinheit entspricht, bewirkt, dass die Verbindungskonfiguration der Schaltung auf eine von (c) der Kurzschlussverbindungskonfiguration und (d) der Widerstandsbremskonfiguration umgeschaltet wird, oder zu einem von (c) der Kurzschlussverbindungskonfiguration, (d) der Widerstandsbremskonfiguration und (c+d) einer Kombination der Kurzschlussverbindungskonfiguration und der Widerstandsbremskonfiguration, abhängig von einer Temperatur der Motoreinheit, wobei die Temperatur der Motoreinheit von einem Motortemperatursensor erfasst wird, der dazu konfiguriert ist, eine Temperatur der Motoreinheit zu erfassen.

2. Motorantriebsvorrichtung nach Anspruch 1, wobei die Rückgewinnungsbrems- und Kurzschlussbremsschaltsteuerung konfiguriert ist, um zu bewirken, dass die Verbindungskonfiguration der Schaltung in (c) die Kurzschlussverbindungskonfiguration geschaltet wird, wenn einem vollständig geladenen Zustand der Batterieeinheit mit einem Ladezustandsdetektor erfasst wird, der konfiguriert ist zum Erfassen, ob ein Ladezustand der Batterieeinheit gleich oder größer als ein vordefinierter Ladezustand ist, wobei ein Ladezustand gleich oder größer als der vordefinierte Ladezustand ein vollständig geladener Zustand der Batterieeinheit entspricht.

3. Motorantriebsvorrichtung nach Anspruch 1, wobei die Motoreinheit einen Synchronmotor enthält und die Schaltung mit einer umschaltbaren Verbindungskonfiguration ein Wechselrichter ist.

4. Motorantriebsvorrichtung nach einem der Ansprüche 1 bis 3, wobei die Kurzschlussstromsteuerung so konfiguriert ist, dass sie einen Kurzschlussstrom durch Impulsbreitenmodulationsantrieb steuert.

5. Motorantriebsvorrichtung nach Anspruch 1, wobei die Kurzschlussstromsteuerung so konfiguriert ist, dass sie eine Vektorsteuerung verwendet, die einen Drehmomentstrom und einen Feldstrom verwendet, um einen Kurzschlussstrom durch Pulsweitenmodulationsansteuerung zu steuern.

6. Motorantriebsvorrichtung nach Anspruch 1, wobei die Motoreinheit einen Traktionsmotor zum Antreiben eines Elektrofahrzeugs umfasst.

7. Elektrofahrzeug mit einer Motorantriebsvorrichtung nach einem der Ansprüche 1 bis 6.

8. Elektrofahrzeug nach Anspruch 7, ferner umfassend:
eine Motoreinheit;
eine Radlagereinheit; und
eine Reduziereinheit,
wobei die Motoreinheit zusammen mit der Radlagereinheit und der Reduziereinheit ein Radnabenmotorsystem bildet, das teilweise oder vollständig in einem Rad angeordnet ist, wobei das Radnabenmotorsystem die Motoreinheit, die Radlagereinheit und die Reduziereinheit umfasst.

9. Elektrofahrzeug nach Anspruch 8, wobei die Reduziereinheit einen zykloiden Untersetzer umfasst.

## Revendications

1. Dispositif d'entraînement de moteur comprenant :
un circuit avec une configuration de connexion commutable entre :
(a) une configuration de connexion fonctionnelle d'entraînement qui permet à une unité de moteur d'être entraînée avec de l'énergie fournie par une unité de batterie ;
(b) une configuration de connexion de freinage régénératif qui permet à la puissance générée par l'unité de moteur pendant une opération de freinage régénératif d'être utilisée pour charger l'unité de batterie ; et
(c) une configuration de connexion de court-circuit qui provoque un court-circuit des bobines de moteur de l'unité de moteur pour créer une force de freinage ;
un contrôleur de courant de court-circuit configuré pour contrôler un courant de court-circuit qui circule lorsque la configuration de connexion du circuit est (c) la configuration de connexion de court-circuit ;
un contrôleur de commutation de freinage régénératif et de freinage en court-circuit configuré pour effectuer une commande qui amène la configuration de connexion du circuit à être commutée de (b) la configuration de connexion de freinage régénératif à (c) la configuration de connexion en court-circuit, ou vice versa ; et
un circuit de freinage à résistance comprenant une résistance de puissance et un commutateur connecté en série avec la résistance de puissance, le circuit de freinage à résistance étant disposé à l'extérieur de l'unité de moteur, la résistance de puissance pouvant fonctionner pour dissiper la puissance générée par l'unité de moteur afin de créer une force de freinage dans l'unité de moteur,
dans lequel le contrôleur de commutation de freinage régénératif et de freinage en court-circuit peuvent fonctionner pour commander le circuit avec une configuration de connexion commutable ainsi que le commutateur pour fournir (d) une configuration de freinage de résistance qui permet à un courant généré par l'unité de moteur de circuler dans le circuit de freinage à résistance, et
dans lequel le contrôleur de commutation de freinage régénératif et de freinage en court-circuit est configuré pour provoquer la commutation entre (b) la configuration de connexion de freinage régénératif, (c) la configuration de connexion de court-circuit et (d) la configuration de freinage de résistance, ou la commutation entre (b) la configuration de connexion de freinage régénératif, (c) la configuration de connexion de court-circuit, (d) la configuration de freinage de résistance, et (c+d) une combinaison de la configuration de connexion de court-circuit et de la configuration de freinage de résistance, et
dans lequel le contrôleur de commutation de freinage régénératif et de freinage en court-circuit est configuré pour, si un état complètement chargé de l'unité de batterie est détecté avec un détecteur de niveau de charge qui est configuré pour détecter si un niveau de charge de l'unité de batterie est égal ou supérieur à un niveau de charge prédéfini, où un niveau de charge égal ou supérieur au niveau de charge prédéfini correspond à un état complètement chargé de l'unité de batterie, provoquer la commutation de la configuration de connexion du circuit sur l'une parmi (c) la configuration de connexion de court-circuit et (d) la configuration de freinage de résistance, ou à l'une parmi (c) la configuration de connexion de court-circuit, (d) la configuration de freinage de résistance et (c+d) la combinaison de la configuration de connexion de court-circuit et de la configuration de freinage de résistance, en fonction d'une température de l'unité de moteur, la température de l'unité de moteur étant détectée par un capteur de température du moteur configuré pour détecter une température de unité de moteur.

2. Dispositif d'entraînement de moteur selon la revendication 1, dans lequel le contrôleur de commutation de freinage régénératif et de freinage en court-circuit est configuré pour amener la configuration de connexion du circuit à être commutée vers (c) la configuration de connexion en court-circuit, si un état complètement chargé de l'unité de batterie est détectée avec un détecteur de niveau de charge qui est configuré pour détecter si un niveau de charge de l'unité de batterie est égal ou supérieur à un niveau de charge prédéfini, un niveau de charge égal ou supérieur au niveau de charge prédéfini correspondant à un état complètement chargé de la batterie.

3. Dispositif d'entraînement de moteur selon la revendication 1, dans lequel l'unité de moteur comprend un moteur synchrone et le circuit avec une configuration de connexion commutable est un onduleur.

4. Dispositif d'entraînement de moteur selon l'une quelconque des revendications 1 à 3, dans lequel le contrôleur de courant de court-circuit est configuré pour contrôler un courant de court-circuit par commande à modulation de largeur d'impulsion.

5. Dispositif d'entraînement de moteur selon la revendication 1, dans lequel le contrôleur de courant de court-circuit est configuré pour utiliser une commande vectorielle qui utilise un courant de couple et un courant de champ pour contrôler un courant de court-circuit via une commande à modulation de largeur d'impulsion.

6. Dispositif d'entraînement de moteur selon la revendication 1, dans lequel l'unité de moteur comprend un moteur de traction pour entraîner un véhicule électrique.

7. Véhicule électrique comprenant un dispositif d'entraînement de moteur tel que défini par l'une quelconque des revendications 1 à 6.

8. Véhicule électrique selon la revendication 7, comprenant en outre :
une unité de moteur;
une unité de roulement de roue ; et
un groupe réducteur,
dans lequel l'unité de moteur, conjointement avec l'unité de roulement de roue et le groupe réducteur, forme un système de moteur dans la roue qui est partiellement ou entièrement disposé à l'intérieur d'une roue, le système de moteur dans la roue comprenant l'unité de moteur, l'unité de roulement de roue et le groupe réducteur.

9. Véhicule électrique selon la revendication 8, dans lequel le groupe réducteur comprend un réducteur cycloïdal.
